(19) 

Europäisches
Patentamt
European
Patent Office
Office européen
des brevets

(11) **EP 4 207 443 A1**

(12) **EUROPEAN PATENT APPLICATION**
published in accordance with Art. 153(4) EPC

(43) Date of publication:
**05.07.2023 Bulletin 2023/27**

(21) Application number: **21881958.9**

(22) Date of filing: **18.10.2021**

(51) International Patent Classification (IPC):
**H01M 50/119** (2021.01)

(52) Cooperative Patent Classification (CPC):
**B32B 7/12; B32B 15/088; B32B 15/09;
B32B 15/18; B32B 15/20; B32B 27/06;
B32B 27/30; B32B 27/32; B32B 27/34;
B32B 27/36; B32B 33/00; B65D 65/40;
H01M 50/119; H01M 50/126; H01M 50/129;**

(Cont.)

(86) International application number:
**PCT/CN2021/124408**

(87) International publication number:
**WO 2022/083542 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.10.2020 CN 202011133536**

(71) Applicant: **Ningde Amperex Technology Ltd.
Ningde City, Fujian Province 352100 (CN)**

(72) Inventors:
- **LI, Rui
  Ningde, Fujian 352106 (CN)**
- **HUANG, Zhiqi
  Ningde, Fujian 352106 (CN)**
- **LI, Lin
  Ningde, Fujian 352106 (CN)**
- **GUO, Peipei
  Ningde, Fujian 352106 (CN)**

(74) Representative: **Klunker IP
Patentanwälte PartG mbB
Destouchesstraße 68
80796 München (DE)**

(54) **PACKAGING FILM, BATTERY, AND ELECTRONIC DEVICE**

(57) A packaging layer is disclosed, including a protection layer, a metal layer, and a first packaging layer stacked in sequence. A melting point of the first packaging layer is 100°C to 130°C. This application further provides a battery having such packaging layer and an electronic apparatus having such battery. This application can improve safety of batteries.

FIG. 1

EP 4 207 443 A1

(52)  Cooperative Patent Classification (CPC): (Cont.)
      Y02E 60/10

**Description**

**TECHNICAL FIELD**

This application relates to the field of energy storage technologies, and in particular, to a packaging layer, a battery, and an electronic apparatus.

**BACKGROUND**

With popularization of consumer electronic products such as notebook computers, mobile phones, handheld game consoles, tablet computers, mobile power supplies, and unmanned aerial vehicles, increasingly stringent requirements are raised for batteries.

However, safety of batteries still cannot be effectively ensured. For example, when thermal runaway occurs in a battery during charge/discharge cycling, a large amount of gas is generated inside the battery, which increases internal pressure of the battery and even causes the battery to explode or catch fire, reducing the safety of the battery.

**SUMMARY**

In order to resolve the foregoing shortcomings of the prior art, it is necessary to provide a packaging layer capable of improving safety of batteries.

In addition, it is also necessary to provide a battery having such packaging layer, and an electronic apparatus having such battery.

This application provides a packaging layer including a protection layer, a metal layer, and a first packaging layer stacked in sequence. A melting point of the first packaging layer is 100°C to 130°C.

In some embodiments of this application, the first packaging layer includes a copolymer, and a polymeric monomer in the first packaging layer includes propylene and ethylene.

In some embodiments of this application, the first packaging layer includes polypropylene and at least one polymer different from the polypropylene, and the polymer has a lower melting point than the polypropylene.

In some embodiments of this application, the first packaging layer includes polypropylene, and the polypropylene includes isotactic polypropylene and atactic polypropylene.

In some embodiments of this application, the packaging layer further includes a second packaging layer, and a melting point of the second packaging layer is higher than 130°C.

In some embodiments of this application, the second packaging layer includes polypropylene.

In some embodiments of this application, the first packaging layer is sandwiched between the metal layer and the second packaging layer.

In some embodiments of this application, the second packaging layer is sandwiched between the metal layer and the first packaging layer.

In some embodiments of this application, the second packaging layer is provided in a quantity of two, and the first packaging layer is sandwiched between the two second packaging layers.

In some embodiments of this application, the first packaging layer is provided in a quantity of two, and the second packaging layer is sandwiched between the two first packaging layers.

In some embodiments of this application, the total thickness of the first packaging layer and the second packaging layer is 20 microns to 100 microns.

In some embodiments of this application, the packaging layer further includes a binding layer between the protection layer and the metal layer.

This application further provides a battery, including an electrode assembly and a packaging bag for packaging the electrode assembly. The packaging bag includes the foregoing packaging layer, and the first packaging layer of the packaging layer is sandwiched between the electrode assembly and the protection layer.

In some embodiments of this application, the packaging bag includes a packaging bag body for covering the electrode assembly and a sealing edge connected to the packaging bag body, and represented by packaging tension of the packaging bag at the sealing edge is F and that temperature inside the battery is T, where F and T satisfy the following relationship: $F$ (N/mm)$=22.933-0.175T$ (°C).

This application further provides an electronic apparatus, including the foregoing battery.

In this application, the melting point of the first packaging layer is set to be within a temperature range of 100°C to 130°C. When the temperature of the battery reaches this temperature range due to heat and gas generated inside the battery, the first packaging layer at the sealing edge is melted so that packaging tension at the sealing edge is decreased. Therefore, the sealing edge is burst open and high-temperature gas inside the battery is released, reducing the risk of short circuit caused by deformation of the electrode assembly and the risk of explosion and fire caused by heating, thereby improving the safety of the battery.

## BRIEF DESCRIPTION OF DRAWINGS

FIG 1 is a schematic structural diagram of a packaging layer according to an embodiment of this application.
FIG 2 is a schematic structural diagram of a packaging layer according to another embodiment of this application.
FIG 3 is a schematic structural diagram of a packaging layer according to still another embodiment of this application.
FIG 4 is a schematic structural diagram of a packaging layer according to yet another embodiment of this application.
FIG 5 is a schematic structural diagram of a packaging layer according to still yet another embodiment of this application.
FIG 6 is a schematic structural diagram of a battery according to an embodiment of this application.
FIG 7 is a schematic structural diagram of an electronic apparatus according to an embodiment of this application.
FIG 8 is a schematic diagram of correspondences between packaging tension of a packaging bag and temperature of a battery in examples and a comparative example of this application.

Reference signs of main components:

| | |
|---|---|
| Packaging layers | 1, 2, 3, 4, and 5; |
| Protection layer | 10; |
| Metal layer | 20; |
| First packaging layer | 30; |
| Binding layer | 40; |
| Second packaging layer | 50; |
| Battery | 100; |
| Packaging bag | 101; |
| Electrode assembly | 102; |
| Negative electrode tab | 103; |
| Positive electrode tab | 104; |
| Electronic apparatus | 200; |
| Packaging bag body | 1011; |
| Sealing edge | 1012; |
| Top sealing edge | 1013; |
| Side sealing edge | 1014; |

This application is further described in the following specific embodiments with reference to the accompanying drawings.

## DESCRIPTION OF EMBODIMENTS

The following clearly and completely describes the technical solutions in some embodiments of this application with reference to the accompanying drawings in some embodiments of this application. Apparently, the described embodiments are merely some rather than all of the embodiments of this application.

Unless otherwise defined, all technical and scientific terms used herein shall have the same meanings as those commonly understood by a person skilled in the art to which this application pertains. The terms used herein in this specification of this application are only used to describe specific embodiments, but are not intended to limit this application.

The following describes in detail some embodiments of this application with reference to the accompanying drawings. In absence of conflicts, the following embodiments and features in the embodiments may be combined.

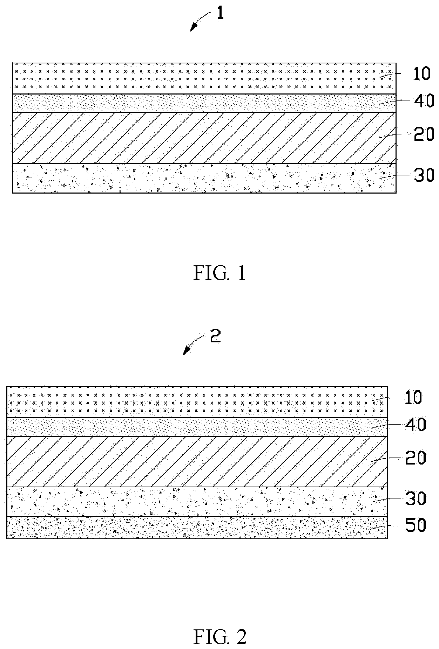

Referring to FIG 1, an embodiment of this application provides a packaging layer 1 including a protection layer 10, a metal layer 20, and a first packaging layer 30 stacked in sequence. In actual application, the packaging layer 1 can be folded in half, and then given temperature and pressure can be applied to a surface of the packaging layer 1 for heat sealing, so that the first packaging layer 30 is melted to form a sealing edge, thereby obtaining a packaging bag for packaging an electrode assembly of a battery.

Herein, the protection layer 10 is configured to protect the metal layer 20 from being damaged by external force, and is also able to prevent external air from penetrating inside so as to maintain a water- and oxygen-free internal environment for the battery. The metal layer 20 is configured to avoid penetration of moisture from the external environment and protect the battery from being damaged by external force. The first packaging layer 30 is configured to be melted under given temperature and pressure to implement packaging, and is also configured to avoid corrosion of the metal layer 20 caused by contact of the electrolyte with the metal layer 20. A melting point of the first packaging layer 30 is 100°C to 130°C.

In the prior art, a packaging layer of the packaging layer 1 is usually made of polypropylene (PP) with a melting point higher than 130°C. In this application, the melting point of the first packaging layer 30 is set to be within a temperature range of 100°C to 130°C, which is lower than a melting point of the packaging layer in the prior art. When the temperature of the battery reaches this temperature range due to heat and gas generated inside the battery, the first packaging layer 30 at the sealing edge is melted so that packaging tension at the sealing edge is decreased. Therefore, the sealing edge is burst open and high-temperature gas inside the battery is released, reducing the risk of short circuit caused by deformation of the electrode assembly and the risk of explosion and fire caused by heating, thereby improving the safety of the battery. Herein, if the melting point of the first packaging layer 30 is lower than 100°C, the sealing edge is burst open even when heat generation inside the battery is not grave, which causes an unnecessary risk of liquid leakage and affects normal use of the battery; or if the melting point of the first packaging layer 30 is higher than 130°C, the sealing edge is burst open only when the heat generation inside the battery is grave, which is not conducive to safety improvement of the battery.

In an embodiment, the first packaging layer 30 includes a copolymer, and a polymeric monomer in the first packaging layer 30 includes propylene and ethylene. That is, the first packaging layer 30 includes a propylene-ethylene block copolymer. Propylene and ethylene are mixed for copolymerization, to obtain a main chain of the copolymer in which propylene and ethylene segments are distributed, and the ethylene segment is used to lower an overall melting point of the first packaging layer 30.

In another embodiment, the first packaging layer 30 may further include polypropylene and at least one polymer different from the polypropylene, and the polymer has a lower melting point than the polypropylene. The polymer may be a polyethylene (PE) and/or polyolefin elastomer (POE). In this embodiment, the polymer may specifically be polyethylene, where a mass percentage of the polypropylene in the first packaging layer 30 is 70% to 99.9%, and a mass percentage of the polyethylene in the first packaging layer 30 is 0.1% to 30%. Adding another polymer with a lower melting point to the first packaging layer 30 can also lower the overall melting point of the first packaging layer 30. In addition, the polypropylene can ensure that the packaging layer 1 has some packaging strength after used for packaging.

In another embodiment, the first packaging layer 30 includes atactic polypropylene. Atactic polypropylene has a lower melting point than isotactic polypropylene, which can also lower the overall melting point of the first packaging layer 30.

In an embodiment, the packaging layer 1 further includes a binding layer 40 between the protection layer 10 and the metal layer 20. The binding layer 40 is configured to bind the protection layer 10 to the metal layer 20, thereby preventing the protection layer 10 and the metal layer 20 from peeling off. A binding material used in the binding layer 40 may include at least one of acrylic resin, epoxy resin, or polyurethane.

Further, the material of the protection layer 10 includes at least one of nylon or polyethylene terephthalate (PET). The metal layer 20 may be specifically an aluminum foil layer or a stainless steel layer.

Referring to FIG 2, another embodiment of this application further provides a packaging layer 2. The packaging layer 2 differs from the foregoing packaging layer 1 in that the packaging layer 2 further includes a second packaging layer 50. As shown in the figure, the first packaging layer 30 is sandwiched between the metal layer 20 and the second packaging layer 50. A melting point of the second packaging layer 50 is higher than 130°C. Herein, the second packaging layer 50 may include polypropylene.

Adding the second packaging layer 50 with a slightly higher melting point to the packaging layer 2 facilitates improvement of overall packaging strength of the packaging layer 2. In addition, in comparison with the packaging layer made of polypropylene in the prior art, when total thickness of the first packaging layer 30 and the second packaging layer 50 is the same as thickness of the packaging layer in the prior art, the sealing edge of the packaging bag in this application is easier to burst open under action of internal high-temperature gas, which is also conducive to the safety improvement of the battery.

In an embodiment, the total thickness of the first packaging layer 30 and the second packaging layer 50 is 20 microns to 100 microns. Herein, if the total thickness of the first packaging layer 30 and the second packaging layer 50 is less than 20 microns, packaging strength of the packaging layer 2 is inadequate, which is not conducive to electrical insulation between the packaging layer 2 and a tab; or if the total thickness of the first packaging layer 30 and the second packaging layer 50 is greater than 100 microns, weight of the battery is increased. More specifically, thickness of both the first packaging layer 30 and the second packaging layer 50 is not less than 10 microns.

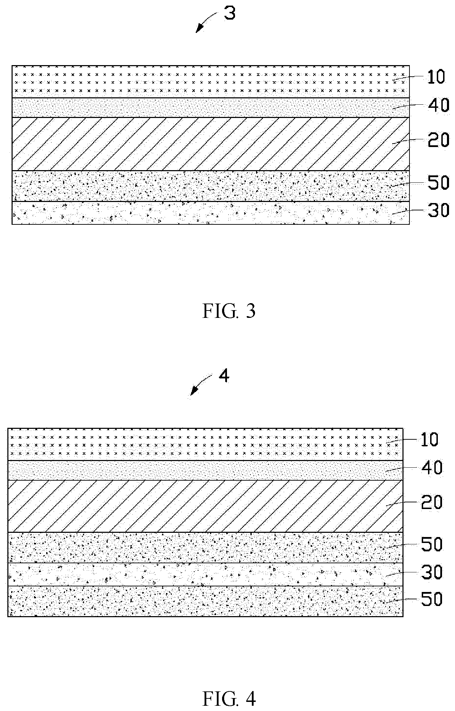

Referring to FIG 3, still another embodiment of this application further provides a packaging layer 3. The packaging layer 3 differs from the foregoing packaging layer 2 in that the second packaging layer 50 may alternatively be sandwiched between the metal layer 20 and the first packaging layer 30. It can be understood that, in this case, after the packaging layer 3 is folded in half and heat-sealed, two first packaging layers 30 are melted and connected. Because polypropylene has relatively great binding force, arranging the second packaging layer 50 between the metal layer 20 and the first packaging layer 30 can improve binding force with the metal layer 20. In addition, when temperature inside the battery is high, it can be ensured that two the first packaging layers 30 at the sealing edge are burst opened first to release the high-temperature gas inside the battery.

Referring to FIG 4, yet another embodiment of this application further provides a packaging layer 4. The packaging layer differs from the foregoing packaging layers 3 and 4 in that there are two second packaging layers 50 and that the first packaging layer 30 is sandwiched between the two second packaging layers 50. Total thickness of the first packaging layer 30 and the two second packaging layers 50 is 20 microns to 100 microns. More specifically, thickness of the first packaging layer 30 or the second packaging layer 50 is not less than 10 microns.

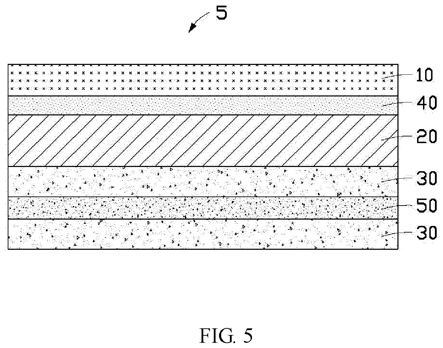

Referring to FIG 5, still yet another embodiment of this application further provides a packaging layer 5. The packaging layer 5 differs from the foregoing packaging layer 4 in that the second packaging layer 50 is sandwiched between the two first packaging layers 30.

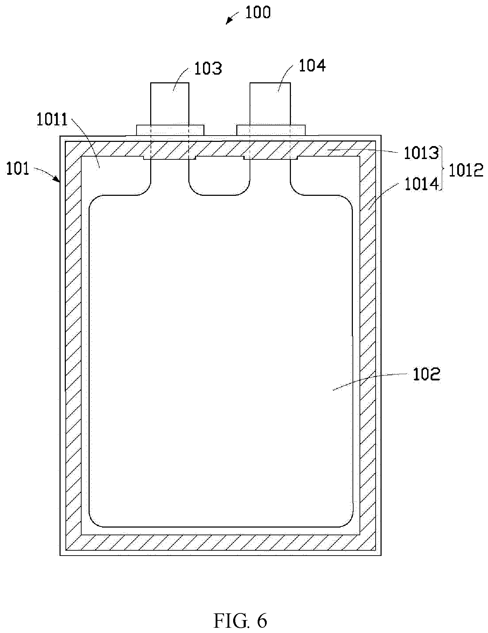

Referring to FIG 6, an embodiment of this application further provides a battery 100, including an electrode assembly 102 and a packaging bag 101 for covering the electrode assembly 102. The packaging bag 101 is formed by the packaging layer 1 (or a packaging layer 2, 3, 4 or 5). The first packaging layer 30 of the packaging layer 1 (or the packaging layer 2, 3, 4, or 5) is sandwiched between the electrode assembly 102 and the protection layer 10. That is, the first packaging layer 30 is closer to the electrode assembly.

In an embodiment, the packaging bag 101 includes a packaging bag body 1011 for packaging the electrode assembly 102 and a sealing edge 1012 connected to the packaging bag body 1011. Represented by packaging tension of the packaging bag 101 at the sealing edge 1012 is F and that temperature inside the battery 100 is T, where F and T satisfy the following relationship: F (N/mm)=22.933-0.175T (°C).

Herein, when the temperature T inside the battery 100 reaches 100°C or above, the packaging tension F of the packaging bag 101 at the sealing edge 1012 starts to decrease significantly, and as a result, the sealing edge 1012 is easily burst open.

Herein, the electrode assembly 102 includes a negative electrode plate, a positive electrode plate, and a separator. The negative electrode plate, the positive electrode plate, and the separator are stacked and the stack is wound. The separator is configured to prevent direct contact between the negative electrode plate and the positive electrode plate, thus preventing the electrode assembly 102 from short circuit. More specifically, the sealing edge 1012 includes a top sealing edge 1013 and a side sealing edge 1014. The battery 100 also includes a negative electrode tab 103 and a positive electrode tab 104 electrically connected to both the negative electrode plate and the positive electrode plate. The negative electrode tab 103 and the positive electrode tab 104 extend out of the packaging bag 101 from the top sealing edge 1013 to be electrically connected to an external element. Herein, after the packaging layer is heat-sealed to form the top sealing edge 1013 and the side sealing edge 1014, the side sealing edge 1014 usually needs to be folded relative to the packaging bag body 101, and therefore, the top sealing edge 1013 is easier to burst open than the side sealing edge 1014.

Herein, the battery 100 in this application includes any apparatus in which an electrochemical reaction may take place, for example, all kinds of primary batteries, secondary batteries, fuel batteries, solar batteries, or capacitors. In particular, the battery may be a lithium secondary battery, including a lithium metal secondary battery, a lithium-ion secondary battery, a lithium polymer secondary battery, and a lithium-ion polymer secondary battery.

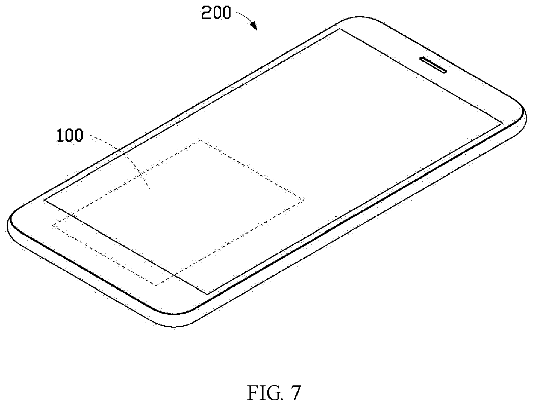

Referring to FIG 7, this application further provides an electronic apparatus 200 having the foregoing battery 100. The battery 100 in this application is applicable to electronic apparatuses 200 in various fields. In an embodiment, the battery 100 in this application may be used for, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following will further describe this application with reference to specific examples and comparative examples. Herein, in the following specific examples, a packaging layer including one first packaging layer and one second packaging layer with the second packaging layer sandwiched between the first packaging layer and the metal layer is used as an example to describe this application with reference to a specific preparation process and test method. A person skilled in the art should understand that the preparation method described in this application is only an example, and other embodiments are not limited to such example. Any other appropriate preparation methods fall within the scope of this application.

Example 1

A packaging layer included a protection layer, a binding layer, a metal layer, a second packaging layer, and a first packaging layer stacked in sequence. The first packaging layer included a polymer formed via copolymerization of 90% propylene and 10% ethylene by mass. A melting point of the first packaging layer was 120°C. The second packaging layer included polypropylene, and had a melting point of 160°C. Total thickness of the first packaging layer and the second packaging layer was 45 microns. Total thickness of the packaging layer was 113 microns.

Example 2

This example differs from Example 1 in that the first packaging layer included a polymer formed via copolymerization of 75% propylene and 25% ethylene, and that the melting point of the first packaging layer was 100°C.

Example 3

This example differs from Example 1 in that the first packaging layer included a polymer formed via copolymerization of 94% propylene and 6% ethylene and that the melting point of the first packaging layer was 130°C.

Comparative example

This differs from Example 1 in that the first packaging layer included polypropylene and had a melting point of 140°C.

Packaging layers in Examples 1 to 3 and the comparative example were heat-sealed under a temperature of 175°C and a pressure of 0.4 Mpa for 3 seconds each to obtain packaging bags. Then, the packaging bags were subjected to high-temperature pretreatment in a process as follows: The packaging bag was soaked in an electrolyte at 85°C and left standing for 48 hours. The electrolyte included 30% ethylene carbonate, 30% propylene carbonate, and 40% methyl propionate by mass. Then the packaging bag was taken out and soaked in ethanol for 5 minutes, and taken out and dried.

Then, packaging tensions at the sealing edge of the packaging bags were measured in a process as follows: The packaging bags was cut along a direction perpendicular to the sealing edge to obtain samples 8 mm wide. The samples were clamped on a Gotech tensile machine and heated to different temperatures (simulation of temperature inside the battery), with the temperature maintained for 5 minutes. The tensile speed was set to $175\pm5$ mm/min and the samples were pulled upwards in the direction of 180 degrees for peeling off, and peeling force was read. The peeling force value (unit: N) read was divided by the width of the sample to obtain the packaging tensions (N/mm) of the sample.

**Table 1**

| Temperature T inside the battery (°C) | | 25 | 45 | 60 | 80 | 100 | 110 | 120 | 130 | 140 |
|---|---|---|---|---|---|---|---|---|---|---|
| Packaging tension F (N/mm) | Example 1 | 6 | 5.6 | 5.3 | 4.9 | 4.3 | 3.7 | 1.9 | 0.2 | 0 |
| | Example 2 | 6.1 | 5.7 | 5.2 | 3.9 | 2.3 | 0.7 | 0.4 | 0 | 0 |
| | Example 3 | 6 | 5.6 | 5.4 | 5 | 4.3 | 3.8 | 2.9 | 1.2 | 0.2 |
| | Comparative example | 5.9 | 5.5 | 5.2 | 4.8 | 4.3 | 3.9 | 3.5 | 2.3 | 0.7 |

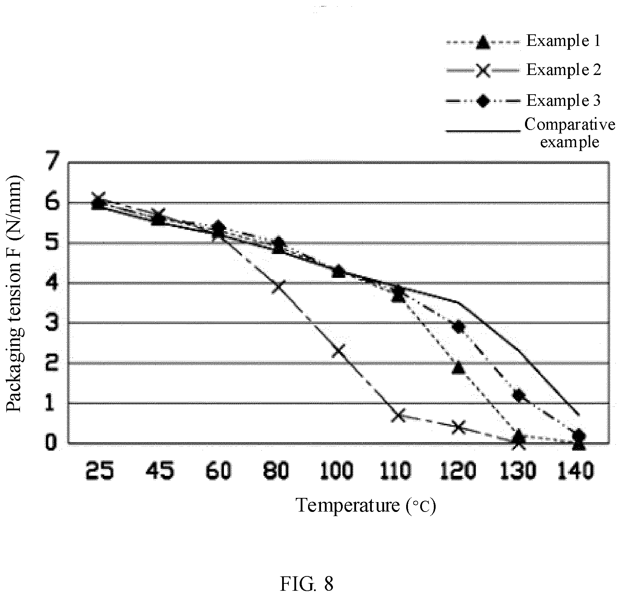

From Table 1 and FIG 8, it can be seen that when the temperature T inside the battery reaches 100°C or above, the packaging tension F of the packaging bag at the sealing edge decreases faster in Examples 1 to 3 than in the comparative example, which indicates that the sealing edge is easier to burst open in Examples 1 to 3 when the temperature T reaches 100°C or above. In Example 2, because the first packaging layer has a lowest melting point, when the temperature T reaches 100°C or above, the packaging tension F of the packaging bag at the sealing edge decreases fastest.

The foregoing embodiments are merely intended to describe the technical solutions of this application, but not intended to constitute any limitation. Although this application is described in detail with reference to preferred embodiments, a person of ordinary skill in the art should understand that modifications or equivalent replacements can be made to the technical solutions of this application without departing from the spirit and essence of the technical solutions of this application.

**Claims**

1. A packaging layer, comprising a protection layer, a metal layer, and a first packaging layer, wherein the protection layer, the metal layer and the fist packaging layer are stacked in sequence, and a melting point of the first packaging layer is 100°C to 130°C.

2. The packaging layer according to claim 1, wherein the first packaging layer comprises a copolymer, and a polymeric monomer in the first packaging layer comprises propylene and ethylene.

3. The packaging layer according to claim 1, wherein the first packaging layer comprises polypropylene and at least one polymer different from the polypropylene and having a lower melting point than the polypropylene.

4. The packaging layer according to claim 1, wherein the first packaging layer comprises atactic polypropylene.

5. The packaging layer according to claim 1, wherein the packaging layer further comprises a second packaging layer, and a melting point of the second packaging layer is higher than 130°C.

6. The packaging layer according to claim 5, wherein the second packaging layer comprises polypropylene.

7. The packaging layer according to claim 5, wherein the first packaging layer is provided between the metal layer and the second packaging layer.

8. The packaging layer according to claim 5, wherein the second packaging layer is provided between the metal layer and the first packaging layer.

9. The packaging layer according to claim 5, wherein the second packaging layer is provided in a quantity of two, and the first packaging layer is provided between the two second packaging layers.

10. The packaging layer according to claim 5, wherein the first packaging layer is provided in a quantity of two, and the second packaging layer is provided between the two first packaging layers.

11. The packaging layer according to any one of claims 1 to 10, wherein a total thickness of the first packaging layer and the second packaging layer is 20 microns to 100 microns.

12. The packaging layer according to claim 1, further comprising a binding layer between the protection layer and the metal layer.

13. A battery, comprising an electrode assembly and a packaging bag for packaging the electrode assembly, wherein the packaging bag comprises the packaging layer according to any one of claims 1 to 12, the first packaging layer of the packaging layer being provided between the electrode assembly and the protection layer.

14. The battery according to claim 13, wherein the packaging bag comprises a packaging bag body for covering the electrode assembly and a sealing edge connected to the packaging bag body, and a packaging tension of the packaging bag at the sealing edge represented by F and a temperature inside the battery represented by T satisfy the following relationship:

$$F \text{ (N/mm)} = 22.933 - 0.175T \text{ (°C)}.$$

15. An electronic apparatus, comprising the battery according to any one of claims 13 and 14.

1

FIG. 1

2

FIG. 2

3

| | |
|---|---|
| | — 10 |
| | — 40 |
| | — 20 |
| | — 50 |
| | — 30 |

FIG. 3

4

| | |
|---|---|
| | — 10 |
| | — 40 |
| | — 20 |
| | — 50 |
| | — 30 |
| | — 50 |

FIG. 4

FIG. 5

FIG. 6

FIG. 7

FIG. 8

## INTERNATIONAL SEARCH REPORT

| International application No. |
|---|
| **PCT/CN2021/124408** |

| A. | CLASSIFICATION OF SUBJECT MATTER |
|---|---|
| | H01M 50/119(2021.01)i |

According to International Patent Classification (IPC) or to both national classification and IPC

| B. | FIELDS SEARCHED |
|---|---|

Minimum documentation searched (classification system followed by classification symbols)

    B32B; H01M

Documentation searched other than minimum documentation to the extent that such documents are included in the fields searched

Electronic data base consulted during the international search (name of data base and, where practicable, search terms used)

    CNTXT; CNABS; DWPI; VEN: 封装膜, 熔点, 聚丙烯, 聚乙烯, 压力, 电池, 安全性, packaging film, melt+, pressure, polypropylene , pp, battery, encapsulation

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 211670255 U (BEIJING XIAOMI MOBILE SOFTWARE CO., LTD.) 13 October 2020 (2020-10-13) <br> claims 1-10, description [0004] to [0041], description figures 1-5 | 1-15 |
| A | CN 109476887 A (MITSUI CHEMICALS, INC.) 15 March 2019 (2019-03-15) <br> entire document | 1-15 |
| A | CN 110828744 A (BYD COMPANY LTD.) 21 February 2020 (2020-02-21) <br> entire document | 1-15 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 January 2022** | **14 January 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/124408**

| Patent document cited in search report | | | Publication date (day/month/year) | Patent family member(s) | | | Publication date (day/month/year) |
|---|---|---|---|---|---|---|---|
| CN | 211670255 | U | 13 October 2020 | None | | | |
| CN | 109476887 | A | 15 March 2019 | KR | 20190014532 | A | 12 February 2019 |
| | | | | KR | 102174575 | B1 | 05 November 2020 |
| | | | | JP | WO2018016460 | A1 | 22 March 2019 |
| | | | | JP | 6847111 | B2 | 24 March 2021 |
| | | | | EP | 3489298 | A1 | 29 May 2019 |
| | | | | EP | 3489298 | A4 | 18 March 2020 |
| | | | | US | 2019300688 | A1 | 03 October 2019 |
| | | | | TW | 201819510 | A | 01 June 2018 |
| | | | | WO | 2018016460 | A1 | 25 January 2018 |
| | | | | JP | 2021002521 | A | 07 January 2021 |
| | | | | JP | 6942851 | B2 | 29 September 2021 |
| CN | 110828744 | A | 21 February 2020 | WO | 2021143514 | A1 | 22 July 2021 |
| | | | | TW | 202127711 | A | 16 July 2021 |

Form PCT/ISA/210 (patent family annex) (January 2015)